## Europäisches Patentamt
## European Patent Office
## Office européen des brevets

(19)

(11) Publication number: **0 208 554**
B1

# EUROPEAN PATENT SPECIFICATION

(12)

(45) Date of publication of the patent specification: 17.10.90

(51) Int. Cl.⁵: **F16C 33/04, F01L 1/16, F02F 7/00**

(21) Application number: 86305336.9

(22) Date of filing: 11.07.86

(54) Assembly having two members movable in contact.

(30) Priority: 12.07.85 JP 152551/85

(43) Date of publication of application:
14.01.87 Bulletin 87/3

(45) Publication of the grant of the patent:
17.10.90 Bulletin 90/42

(84) Designated Contracting States:
DE GB SE

(56) References cited:
EP-A- 0 051 300
DE-A- 2 041 282
DE-A- 2 131 509

INGENIEURS DE L'AUTOMOBILE, no. 8,
November/December 1983, pages 28-33, Paris, FR; U.
DWORAK et al.: "Ceramic components for combustion
engines"
M.T.Z. MOTORTECHNISCHE ZEITSCHRIFT, vol. 46, no 5,
May 1985, pages 155-160, Stuttgart, DE; P. WALZER et
al.: "Alternative Werkstoffe für Automobilantriebe"

(73) Proprietor: NGK INSULATORS, LTD., 2-56, Suda-cho,
Mizuho-ku, Nagoya-shi, Aichi 467(JP)

(72) Inventor: Oda, Isao, 19, Gokuraku 3-Chome Meito-Ku,
Nagoya City Aichi Pref.(JP)

(74) Representative: Paget, Hugh Charles Edward et al,
MEWBURN ELLIS & CO. 2/3 Cursitor Street, London
EC4A 1BQ(GB)

ACTORUM AG

EP 0 208 554 B1

## Description

This invention relates to an assembly having two members arranged for relative movement with respective surfaces in contact during or before or after the movement.

The invention is applicable to relatively sliding members and also to contacting (abutting) members such as a valve member and a valve seat and rolling members such as in a roller bearing.

For convenience the term "sliding member" is used, but herein carries a reference to such contacting members and rolling members. Also, the term "coating" includes a partial coating and especially includes a coating with a composition of Cu and LiF for only depressions formed on a surface of a metal member.

Hitherto as sliding members for use in engines, use has been made of metal materials, such as heat-resistant alloys, with a lubricant such as oil, because many engine members have to be exposed to high temperature and to wear due to high speed.

However, since the required conditions of use of such sliding members become more severe year by year and further there is a desire for avoiding the use of lubricant, there arises the drawback that such requirements for temperature and wear cannot be met by metal materials or that the metal member must be replaced after a short period.

In order to eliminate or reduce this drawback, a ceramic material may be used for a sliding member. Suitable ceramic materials can endure high temperature and have high wear resistivity and high heat efficiency, but tend to be very hard and brittle. Therefore, not all ceramic materials can be used for a sliding member for this purpose.

Hitherto, there has been no investigation as to what ceramic material is most suitable as a sliding member especially for an engine member which is to endure high temperature and requires high wear resistance nor as to what other sliding member is most suitable to be brought into contact with such a ceramic material.

It is mentioned that DE-A-2131509 discloses a seal against a rotary ceramic heat exchanger core where the seal is made of particles having a LiF or NaF core enclosed by a copperlayer. DE-A-2041282 describes seals for the same purpose made of a mixture of copper powder and LiF powder, flame-sprayed onto a bonding layer on a steel base.

CH-A 474 699 shows a sliding surface with hollows a grooves which are filled with a metal having good lubricating properties, to improve the sliding property of the surface.

The present invention is able to eliminate or reduce the drawback mentioned above and to provide an assembly including a ceramic member, e.g. an assembly for use in an engine, in which there is a good combination between the ceramic member and another member to be brought into contact with the ceramic member, without use of lubricant.

The invention is set out in claim 1.

The contact surfaces may be planar, cylindrical, frusto-conical or of any other shape.

This invention is based on the finding that a ceramic material such as silicon nitride, sialon, partially stabilized zirconia or silicon carbide sliding, abutting or rolling against a metal member whose contact surface has depressions in it and is coated with a composition of Cu and LiF, e.g. by means of a plasma spray, can provide high wear resistivity at any temperatures from room temperature to high temperature.

Moreover, this is in contrast with sliding of ceramic material against ceramic material which at best cannot achieve high wear resistivity.

Embodiments of the invention will now be described by way of example with reference to the accompanying drawings, wherein:

Fig. 1 is a schematic view showing a test apparatus for measuring a sliding characteristic; and
Figs. 2 to 5 are diagrams illustrating the testing results of specimens.

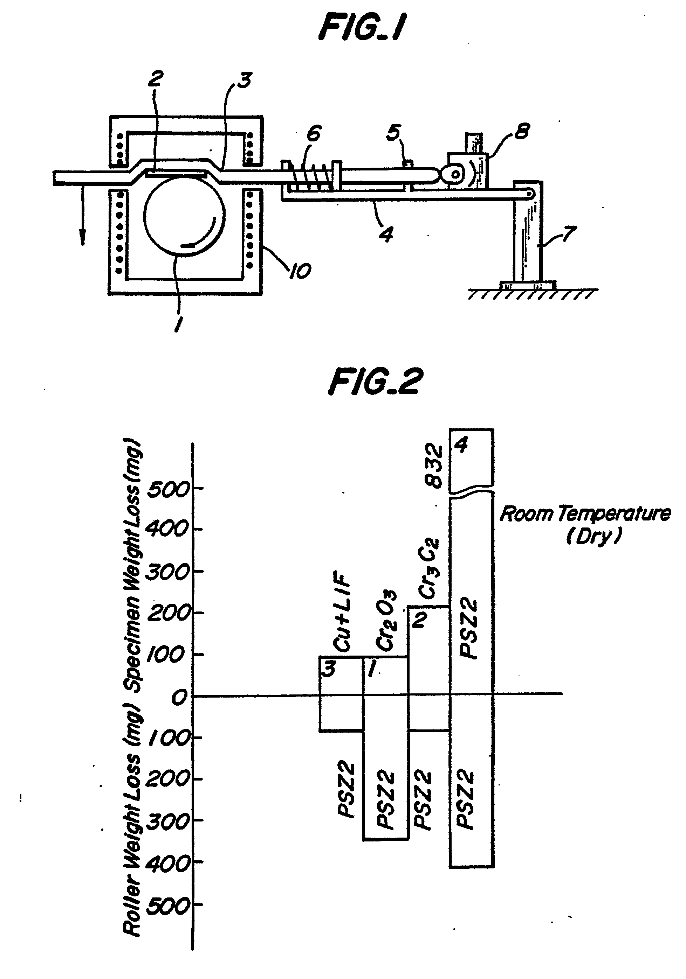

Fig. 1 is a schematic view showing a test apparatus for measuring sliding characteristics such as friction and wear. One specimen made of ceramic material is arranged in the test apparatus as a counterface roller 1 having a diameter of 50 mm. The ceramic counter roller 1 is rotated at 1,000 rpm by means of a driving device not shown. As the other specimen, a test specimen 2 made of for example metal material coated with Cu+LiF and having dimensions of 40 mm x 6.33 mm x 3 mm is arranged in the test apparatus in such a manner that it is brought into contact with the counter roller 1 by means of a loading arm 3 as shown in Fig. 1. One end of the loading arm 3 is secured to a supporting member 4 through a linear/rotary bearing 5 and a spring 6, and the support member 4 is moved pivotally by means of a pivot bracket 7. Moreover, on the support member 4, a tip portion of the loading arm 3 is brought into contact with a cam 9 connected to a motor 8 rotating at 3 rpm, and thus the loading arm 3 is moved forward and backward with a stroke of 12 mm three times per minute. A force of 20N is loaded at the other end of the loading arm 3 downwardly, and thus the ceramic counter roller 1 is brought into contact with the test specimen 2 at a constant pressure. The ceramic counter roller 1 and the test specimen 2 are surrounded by an insulated oven 10 so as to enable a test to be performed at high temperature.

Using the test apparatus described above, weight loss and maximum wear depth between various ceramic materials and metals or ceramic materials are measured. The materials used for the specimens are shown in Table 1 together with their forming process. In Table 1, each coating layer is formed by a plasma

2

spray. Moreover, in the high-speed tool steel coated with Cu+LiF, spherical depressions each having a diameter of 390 µm and a depth of 100 µm are formed at intervals of 460 µm in the steel surface by etching, prior to coating with Cu+LiF.

Table 1

| Material name | Process Details |
|---|---|
| $Cr_2O_3$ | 316 stainless steel plate 3 mm thick, grit blasted both sides, plasma spray one side bond coat of NiAL (100 µm) plus chromium oxide (150–200 µm) diamond lap to 75 µm of chrome oxide Ra = 4 - 8 micro-in (0.1–0.2 µm). |
| $Cr_3C_2$ | 316 stainless steel plate 3 mm thick, grit blasted both sides, plasma spray one side Metco 815 (75% $Cr_3C_2$ 20% Ni 5%Cr) (300 µm) diamond lap to (175 µm) Ra = 4–8 micro-in (0.1–0.2 µm). |
| Cu+LiF | M2 hardened and tempered 65 Rc, surface ground, polished and diamond polished. Surface pockets etched one side. Light grit blast. Plasma spray Cu+LiF (200–250 µm), grind on abrasive papers to (100–125 µm) Ra = 16 micro-in (0.4 µm). |
| SN1 | Atmospheric sintered silicon nitride, hardness 15 GPa, density 3.27 |
| SN2 | Atmospheric sintered sialon, hardness 14 GPa, density 3.25 |
| PSZ1 | Atmospheric sintered partially stabilized zirconia with $Y_2O_3$, hardness 12 GPa, density 5.91 |
| PSZ2 | Atmospheric sintered partially stabilized zirconia with $Y_2O_3$ + $CeO_2$ hardness 13 GPa, density 5.98 |
| SC1 | Atmospheric sintered silicon carbide, hardness 28 GPa, density 3.10 |

M2 is a high-speed tool steel.

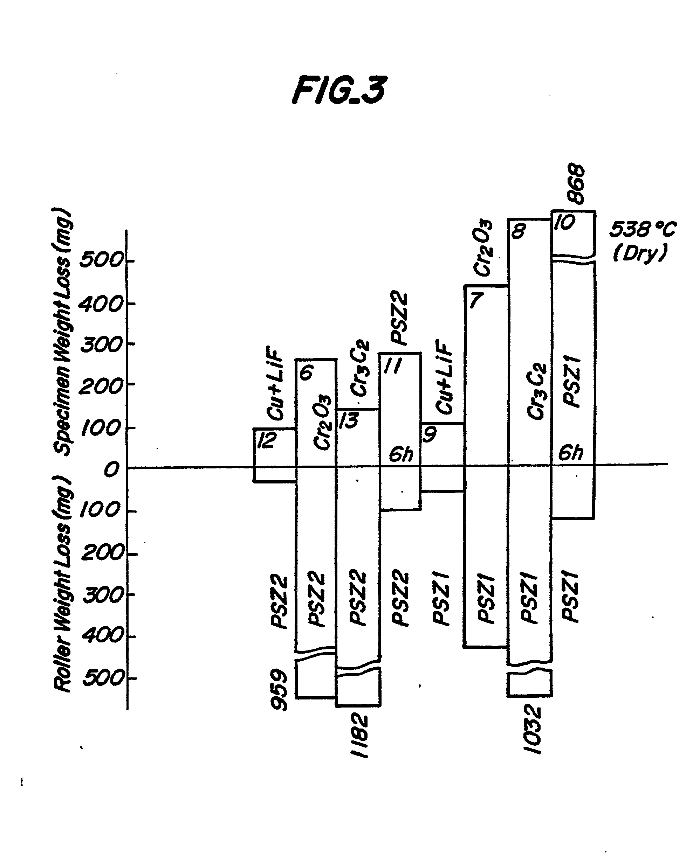

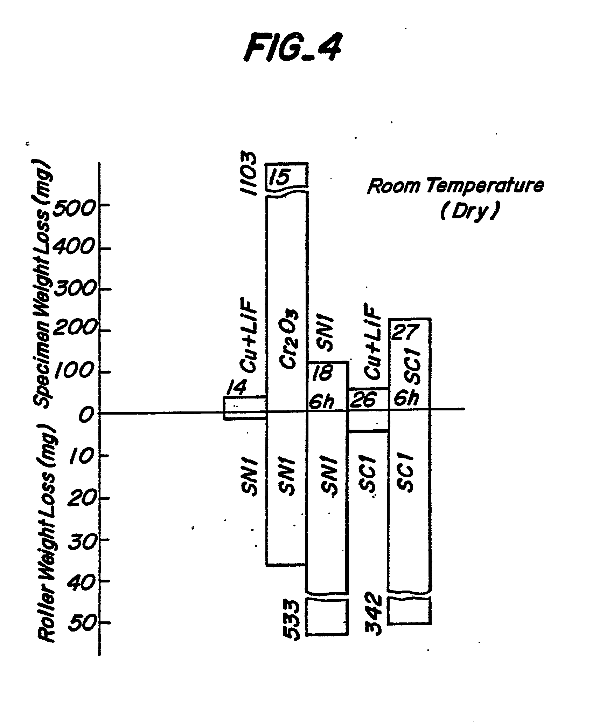

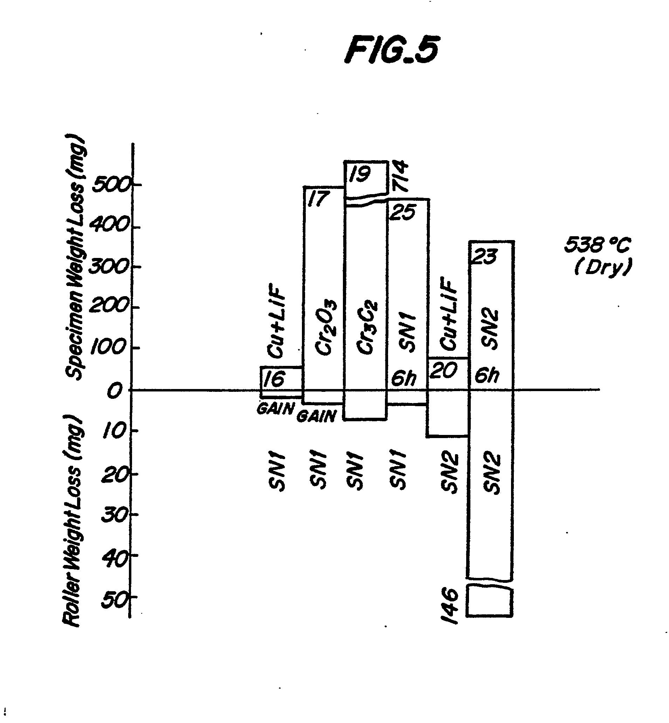

Using the materials described in Table 1, friction and wear tests were performed at room temperature (R.T.) and at 538°C without lubricant to measure the weight loss and maximum wear depth. The test at 538°C was performed to demonstrate the usefulness of the specimen for a piston in a cylinder. The results are shown in the following Table 2. Further, to aid understanding, the results described in Table 2 are summarized in Figs. 2 to 5, where the numerals correspond to the Test Nos. of Table 2.

Table 2a

| Test. No. | Speci-men (2) | Roller (1) | Test du-ration (hour) | Test tempera-ture (°C) | Specimen weight loss (g) | Specimen max wear depth in (mm) | Roller weight loss (g) | Roller max wear depth (microns) |
|---|---|---|---|---|---|---|---|---|
| 1 | $Cr_2O_3$ | PSZ2 | 18 | R.T. | 0.084 | .0071 (.18) | 0.358 | 82 |
| 2 | $Cr_3C_2$ | PSZ2 | 18 | R.T. | 0.204 | .0227 (.58) | 0.089 | 28 |
| 3 | Cu+LiF | PSZ2 | 18 | R.T. | 0.081 | .007  (.18) | 0.094 | 46 |
| 4 | PSZ2 | PSZ2 | 18 | R.T. | 0.832 | .0613 (1.56) | 0.421 | 63 |
| 5 |  | PSZ2 | Roller damaged on heating up | | | | | |
| 6 | $Cr_2O_3$ | PSZ2*1 | 18 | 538 | 0.256 | .023  (.58) | 0.9595 | 189 |
| 7 | $Cr_2O_3$ | PSZ1 | 18 | 538 | 0.422 | .0353 (.90) | 0.446 | 158 |
| 8 | $Cr_3C_2$ | PSZ1 | 18 | 538 | 0.5815 | .063  (1.60) | 1.032 | high |
| 9 | Cu+LiF | PSZ1 | 18 | 538 | 0.0925 | .0077 (.20) | 0.062 | 14 |
| 10 | PSZ1 | PSZ1 | 6 | 538 | 0.868 | .0673 (1.71) | 0.137*3 | 12 |
| 11 | PSZ2 | PSZ2 | 6 | 538 | 0.268 | .022  (.56) | 0.102 | 21 |
| 12 | Cu+LiF | PSZ2 | 18 | 538 | 0.088 | .008  (.20) | 0.027 | 8 |
| 13 | $Cr_3C_2$ | PSZ2 | 18 | 538 | 0.131 | .0138 (.35) | 1.182 | 243 |
| 14 | Cu+LiF | SN1 | 18 | R.T. | 0.035 | .0035 (.09) | 0.001 | <5 |
| 15 | $Cr_2O_3$ | SN1 | 18 | R.T. | 1.1035 | .0632 (1.61) | 0.037 | 23 |
| 16 | Cu+LiF | SN1 | 18 | 538 | 0.0565 | .0043 (0.11) | +0.002 | <5 |
| 17 | $Cr_2O_3$ | SN1 | 18 | 538 | 0.493 | .038  (.97) | +0.004 | <5 |

Table 2b

| Test. No. | Speci- men (2) | Roller (1) | Test du- ration (hour) | Test tempera- ture (°C) | Specimen weight loss (g) | Specimen max wear depth in (mm) | Roller weight loss (g) | Roller max wear depth (microns) |
|---|---|---|---|---|---|---|---|---|
| 18 | SN1 | SN1 | 6 | R.T. | 0.110 | .0203 (.52) | 0.533 | 254 |
| 19 | $Cr_3C_2$ | SN1 | 18 | 538 | 0.7145 | .053 (1.35) | 0.007 | <5 |
| 20 | Cu+LiF | SN2 | 18 | 538 | 0.0765 | .0055 (.14) | 0.011 | <5 |
| 21 | $Cr_2O_3$ | SN2 | 2.5*2 | 538 | 0.017 | .002 (.05) | +0.012 | − |
| | | | 5.5*2 | 538 | 0.017 | .002 (.05) | +0.012 | <5 |
| 22 | $Cr_3C_2$ | SN2 | 2.5*2 | 538 | 0.025 | .0025 (.06) | 0.000 | − |
| | | | 5.5*2 | 538 | 0.0545 | .0055 (.14) | 0.000 | <5 |
| 23 | SN2 | SN2 | 6 | 538 | 0.3705 | .0562 (1.43) | 0.146 | 117 |
| 24 | $Cr_3C_2$ | SN1 | 2.5*2 | R.T. | 0.029 | .0033 (.08) | 0.024 | − |
| | | | 5.5*2 | R.T. | 0.070 | .0088 (.22) | 0.021 | 7 |
| 25 | SN1 | SN1 | 6 | 538 | 0.464 | .058 (1.47) | 0.039 | 25 |
| 26 | Cu+LiF | SC1 | 18 | R.T. | 0.053 | .0041 (.10) | 0.005 | <4 |
| 27 | SC1 | SC1 | 6 | R.T. | 0.223 | .0168 (.43) | 0.342 | 172 |

* 1: Roller damaged on cooling down
* 2: Special test-test load 2.25 ibs 1.0 kg (standard load = 5 ibs 2.3 kg)
* 3: Indicates weight increase (not weight loss)

These test results show that the weight loss and the max wear depth values are always smallest for contact between the specimen of high-speed tool steel (M2) whose surface is coated with Cu+LiF and various ceramics materials, regardless of the test temperature. Thus, combinations of metal, especially high-speed tool steel, coated with Cu+LiF and various ceramics materials are best for an assembly of sliding members. In contrast, a combination of 316 stainless steel whose surface is coated with $Cr_2O_3$ or $Cr_3C_2$ and various ceramics materials shows generally a large weight loss, and thus it is not preferable for such an assembly. Likewise the combination of a ceramics material and a ceramics material shows also a large weight loss, and thus it is not suitable for an assembly of sliding members.

Combinations of metal materials whose surfaces are coated with Cu+LiF and various ceramics materials are thus preferable because weight loss and max wear depth are small regardless of the test temperature.

**Claims**

1. An assembly having two members arranged for relative movement with respective contact surfaces in contact during or before or after the movement, wherein one said contact surface is a surface of a ceramics member and the other is a surface of a metal member coated with a composition of Cu and LiF, characterized in that said ceramics member is silicon nitride, sialon, partially stabilized zirconia and/or silicon carbide and said surface of the metal member has depressions formed in it whose surfaces are coated with said composition of Cu and LiF.

2. An assembly according to claim 1 wherein said metal member is made of a high-speed tool steel.

3. An assembly according to claim 1 or claim 2 which is used in an engine.

4. An assembly according to any one of claims 1 to 3, wherein said two members are a tappet and a cam or a rocker arm and a cam.

5. An assembly according to any one of claims 1 to 3, wherein said two members are a valve and a valve seat.

6. An assembly according to any one of claims 1 to 3, wherein said two members are a liner and a piston ring.

**Patentansprüche**

1. Anordnung mit zwei Elementen, die so angeordnet sind, daß sie relativ beweglich sind gegenüber den jeweiligen Kontaktoberflächen beim Kontakt während oder vor oder nach der Bewegung, worin eine der Kontaktoberflächen eine Oberfläche eines Keramikelements und die andere eine Oberfläche eines Metallelements, das mit einer Zusammensetzung aus Cu und LiF beschichtet ist, darstellen, dadurch gekennzeichnet, daß das Keramikelement aus Siliciumnitrid, Sialon, teilweise stabilisiertem Zirkoniumdioxid und/oder Siliciumcarbid besteht und daß die Oberfläche des Metallelements darin erzeugte Vertiefungen aufweist, deren Oberflächen mit der Zusammensetzung aus Cu und LiF beschichtet sind.

2. Anordnung nach Anspruch 1, worin das Metallelement aus einem Schnelldreh-Werkzeugstahl besteht.

3. Anordnung nach Anspruch 1 oder 2, die in einem Motor verwendet wird.

4. Anordnung nach einem der Ansprüche 1 bis 3, worin die beiden Elemente ein Stößel und eine Nocke oder ein Kipphebel und eine Nocke sind.

5. Anordnung nach einem der Ansprüche 1 bis 3, worin die beiden Elemente ein Ventil und ein Ventilsitz sind.

6. Anordnung nach einem der Ansprüche 1 bis 3, worin die beiden Elemente eine Laufbuchse und ein Kolbenring sind.

**Revendications**

1. Assemblage de deux pièces agencées pour un mouvement relatif par des surfaces respectives de contact en contact pendant ou avant ou après le mouvement, où l'une desdites surfaces de contact est une surface d'une pièce en céramique et l'autre est une surface d'une pièce en métal enduite d'une composition de Cu et LiF, caractérisé en ce que ladite pièce en céramique est en nitrure de silicium, sialon, zircone partiellement stabilisée et/ou carbure de silicium et ladite surface de la pièce en métal a des creux qui y sont formés dont les surfaces sont enduites de ladite composition de Cu et LiF.

2. Assemblage selon la revendication 1, où ladite pièce en métal est faite en acier pour outils rapides.

3. Assemblage selon la revendication 1 ou la revendication 2, qui est utilisé dans un moteur.

4. Assemblage selon l'une quelconque des revendications 1 à 3, où lesdites deux pièces sont un poussoir et une came ou un culbuteur et une came.

5. Assemblage selon l'une quelconque des revendications 1 à 3, où lesdites deux pièces sont une soupape et un siège de soupape.

6. Assemblage selon l'une quelconque des revendications 1 à 3, où lesdites deux pièces sont une chemise et un segment de piston.

# FIG.1

# FIG.2

# FIG.3

EP 0 208 554 B1

# FIG.4

Room Temperature (Dry)

# FIG.5